# EUROPEAN PATENT APPLICATION

(11) **EP 4 254 412 A1**
(43) Date of publication of application: **04.10.2023**
(21) Application number: 23164237.2
(22) Date of filing: 27.03.2023
(51) Int. Cl.: G11B 27/031, G11B 27/34, H04N 21/854

(54) **MULTI-RESORUCE EDITING SYSTEM AND MULTI-RESOURCE EDITING METHOD**

(30) Priority: 30.03.2022 CN 202210331000
(71) Applicant: Optoma China Co., Ltd., Shanghai (CN)
(72) Inventor: GUO, KAI-MING, Shanghai (CN); WANG, TIAN-SHEN, Shanghai (CN); XIAO, ZI-XIANG, Shanghai (CN); ZUO, WEN-HAO, Shanghai (CN)
(74) Representative: Ter Meer Steinmeister & Partner

(57) **Abstract**

A multi-resource editing system and a multi-resource editing method are disclosed. The multi-resource editing system comprises an editor, a user interface and a broadcasting and recording apparatus, wherein the editor comprises an image editing module. The user interface electrically connects the image editing module, wherein the user interface comprises a plurality of windows. The user interface generates at least one editing signal, the at least one editing signal is generated according to an operation result of the user interface, and the image editing module generates at least one editing instruction according to the at least one editing signal and generates a synthetic image scenario according to the at least one editing signal. The image editing module outputs the synthetic image scenario to the broadcasting and recording apparatus such that the broadcasting and recording apparatus generates a broadcast synthetic image according to a recorded image and the synthetic image scenario.

## Description

This application claims priority of CN appl. no. 202210331000.4, filed on March 30, 2022.

### BACKGROUND

### Technical Field

The invention relates to an audio-visual data editing system and a method therefor. In particular, the invention relates to a multi-resource editing system and a multi-resource editing method.

### Description of Related Art

With increasing demands for remote video services such as distance teaching, video conferences, and online speech, how to improve the convenience for a user to edit an image scenario before conducting the remote video is one of the main development directions in the related fields. However, a general image scenario editing system can be adapted for only editing a single file, for example, for only inputting data having a specific file format for editing. In addition, the image scenario cannot be edited independently in various scenes at different timings. Therefore, how to realize the independent and fast editing on data having different file formats, so as to achieve independent editing on various scenes and obtain a synthetic audio-visual scenario including multiple file formats to be subsequently applied to related image playback, is currently a research direction in the related fields.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

It is an object of the present invention to provide a multi-resource editing system and a multi-resource editing method, in which independent editing and processing on a plurality of input data and various scenes can be realized.

Other objectives and advantages according to the embodiments of the invention may be further understood from the technical features disclosed in the embodiments of the invention.

The object is solved by the features of the independent claims. Preferred embodiments are given in the dependent claims.

To achieve one, some, or all of the above objectives or other objectives, a multi-resource editing system comprises an editor, a user interface and a broadcasting and recording apparatus. The editor comprises an image editing module. The user interface electrically connects the image editing module. The user interface comprises a plurality of windows. The user interface generates at least one editing signal, the at least one editing signal is generated according to an operation result of the user interface, and the image editing module generates at least one editing instruction according to the at least one editing signal and generates a synthetic image scenario according to the at least one editing signal. The image editing module outputs the synthetic image scenario to the broadcasting and recording apparatus such that the broadcasting and recording apparatus generates a broadcast synthetic image according to a recorded image and the synthetic image scenario.

In one or more embodiments of the invention, the image editing module comprises an input signal detection module and a control and management module.

In one or more embodiments, the input signal detection module may be configured to receive the at least one editing signal.

In one or more embodiments, the control and management module may be configured to generate the at least one editing instruction according to the at least one editing signal.

The editor may comprise a resource input module and a control and management module.

The resource input module may be configured to obtain input data and decode the input data to generate a plurality of input resources.

In one or more embodiments, the input data may have at least one file format.

In one or more embodiments, the image editing module may be coupled to the resource input module.

The image editing module may be configured to edit the input resources according to the at least one editing instruction and the plurality of editing resources and generate a plurality of processed scenes, each of the scenes comprising at least one layer.

In one or more embodiments, the image editing module is configured to perform multi-scene independent processing to combine the at least one layer, the input resources, and the editing resources in each of the scenes before being processed to form the processed scenes, and generate the synthetic image scenario according to the processed scenes.

In one or more embodiments of the invention, the user interface may comprise a scene and resource display window, an asset library window, a monitoring window, a control window and a display window.

In one or more embodiments, the at least one editing signal may be configured to be generated according to at least one operation result of the scene and resource display window, the asset library window, the monitoring window, the control window and the display window.

In one or more embodiments of the invention, the scene and resource display window may include a multi-scene selection page and a multi-resource display page.

The multi-scene selection page may be configured to display the scenes.

The multi-resource display page may be configured to display the input resources.

The input signal detection module may be configured to receive the at least one editing signal generated by the multi-scene selection page and the multi-resource display page.

The control and management module may be configured to generate corresponding the at least one editing instruction, and perform the multi-scene independent processing on the corresponding scene among the scenes according to the at least one editing instruction.

In one or more embodiments of the invention, the asset library window may include an asset selection page, an editing tool selection page, and an asset and tool switching page.

The editing resources may include a plurality of assets and a plurality of editing tools.

The asset selection page may be configured to display the assets.

The editing tool selection page may be configured to display the editing tools.

The asset and tool switching page may be configured to switch between the asset selection page and the editing tool selection page.

In one or more embodiments of the invention, the image editing module may further include a resource reading module.

The resource reading module may be configured to identify and obtain at least one specific function of the input resources, and/or may transmit the at least one specific function to the control and management module.

In one or more embodiments, the monitoring window may include a specific function selection page configured to display the at least one specific function of the input resources.

In one or more embodiments of the invention, the display window may include a real-time editing screen and is configured to display one of the scenes under process.

The image editing module may further include a scene control module.

The scene control module may be configured to adjust a quantity and a sequence of the scenes according to the at least one editing instruction.

In one or more embodiments of the invention, the control window may include an output page.

The control and management module may transmit a reminding signal to the control window according to a successful archival signal being received.

The output page may be configured to display a reminding screen corresponding to the reminding signal.

In one or more embodiments of the invention, the input resources may include at least one of an image resource, a model resource, a virtual reality background resource, an augmented reality object resource, an audio-visual resource, an audio resource, and a presentation resource.

In one or more embodiments of the invention, the image editing module may generate the corresponding at least one layer according to the input resources, such that the image editing module edits the corresponding at least one layer according to the at least one editing instruction.

In one or more embodiments of the invention, the broadcasting and recording apparatus may be electrically connected to a camera, wherein the recorded image may be captured by the camera.

To achieve one, some, or all of the above objectives or other objectives, a multi-resource editing method according to an embodiment of the invention includes the following. A plurality of input data are obtained and decoded by a resource input module of an editor to generate a plurality of input resources. The input data has at least one file format. The input resources are edited according to at least one editing instruction and a plurality of editing resources and a plurality of processed scenes are generated by an image editing module of the editor. Each of the scenes includes at least one layer. The image editing module performs multi-scene independent processing to combine the at least one layer, the input resources, and the editing resources in each of the scenes before being processed to form the processed scenes. A synthetic image scenario is generated according to the processed scenes.

In one or more embodiments of the invention, the multi-resource editing method may further include the following. The synthetic image scenario may be output to a broadcasting and recording apparatus by the editor. A broadcast synthetic image may be generated by the broadcasting and recording apparatus according to a recorded image and the synthetic image scenario.

In one or more embodiments of the invention, the multi-resource editing method may further include the following.

At least one editing signal may be received by an input signal detection module from an input device.

The at least one editing signal may be generated according to an operation result of at least part of a scene and resource display window, an asset library window, a monitoring window, a control window, and a display window of a user interface.

The at least one editing instruction may be generated by a control and management module according to the at least one editing signal to perform the multi-scene independent processing.

In one or more embodiments of the invention, the multi-scene independent processing may include the following. A multi-scene selection page and a multi-resource display page may be displayed by the user interface, and the at least one editing signal generated by the multi-scene selection page and the multi-resource display page may be received and transmitted to the control and management module by the input signal detection module of the image editing module when the scene and resource display window of the user interface is executed, such that the control and management module may generate corresponding the at least one editing instruction according to the at least one editing signal being received, and may perform the multi-scene independent processing on the corresponding scene among the scenes according to the at least one editing instruction.

In one or more embodiments of the invention, the editing resources may include a plurality of assets and a plurality of editing tools.

The multi-scene independent processing may include the following. An asset selection page, an editing tool selection page, and an asset and tool switching page may be displayed by the asset library window of the user interface when the asset library window is executed.

The asset selection page may be configured to display the assets. The editing tool selection page may be configured to display the editing tools. The asset and tool switching page may be configured to switch between the asset selection page and the editing tool selection page.

In one or more embodiments of the invention, the multi-resource editing method may further include the following. At least one specific function of the input resources may be identified and obtained by a resource reading module. The at least one specific function may be transmitted to the control and management module. The multi-scene independent processing may include the following. A specific function selection page may be displayed by the monitoring window of the user interface to display the at least one specific function of the input resources when the monitoring window is executed.

In one or more embodiments of the invention, the multi-scene independent processing may include the following. A real-time editing screen may be displayed by the display window of the user interface, and a quantity and a sequence of the scenes may be adjusted by a scene control module according to the at least one editing instruction when the display window is executed.

In one or more embodiments of the invention, the multi-scene independent processing may include the following. An output page may be displayed by the control window of the user interface, and a reminding signal may be transmitted to the control window by the control and management module according to a successful archival signal being received to display a reminding screen corresponding to the reminding signal by the output page when the control window is executed.

In one or more embodiments of the invention, the input resources may include at least one of an image resource, a model resource, a virtual reality background resource, an augmented reality object resource, an audio-visual resource, an audio resource, and a presentation resource.

In one or more embodiments of the invention, the image editing module may generate the corresponding at least one layer according to the input resources, such that the image editing module edits the corresponding at least one layer according to the at least one editing instruction.

Based on the foregoing, in the multi-resource editing system and the multi-resource editing method according to the embodiments of the invention, the multi-scene independent processing is performed on different input data and various scenes by the resource input module and the image editing module to process a plurality of input data having different file formats at the same time and independently edit a plurality of scenes to generate the synthetic audio-visual scenario.

Other objectives, features and advantages of the present invention will be further understood from the further technological features disclosed by the embodiments of the present invention wherein there are shown and described preferred embodiments of this invention, simply by way of illustration of modes best suited to carry out the invention.

To make the aforementioned more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 a schematic diagram of a multi-resource editing system of an embodiment of the invention.
FIG. 2 is a flowchart of a multi-resource editing method of an embodiment of the invention.
FIG. 3 schematic diagram of a multi-resource editing system of another embodiment.
FIG. 4 is a schematic diagram of a user interface according to an embodiment of the invention.
FIG. 5 is an architectural diagram of an editor according to another embodiment of the invention.

### DESCRIPTION OF THE EMBODIMENTS

It is to be understood that other embodiments may be utilized and structural changes may be made without departing from the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

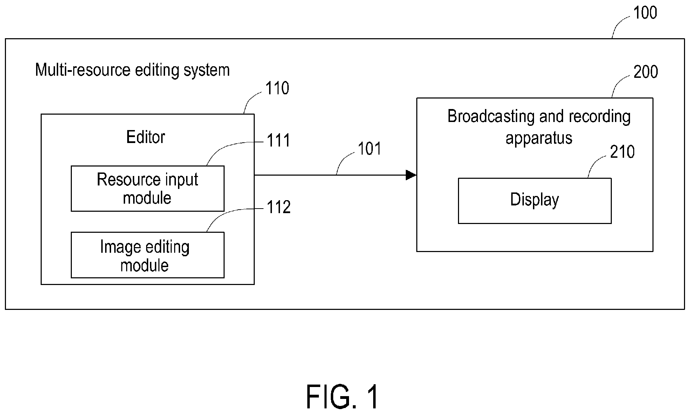

FIG. 1 is a schematic diagram of a multi-resource editing system of an embodiment of the invention. With reference to FIG. 1, a multi-resource editing system 100 includes an editor 110. The editor 110 includes a resource input module 111 and an image editing module 112. In this embodiment, the resource input module 111 may decode input data provided by an external multimedia collection system (not shown in the figure) to obtain input resources for the image editing module 112 to perform subsequent image processing or image synthesis and generate a synthetic image scenario 101. The external multimedia collection system includes an audio-visual recording device (e.g., a camera), a smart phone, a personal computer (PC), a tablet PC, or a cloud server, for example.

The multi-resource editing system 100 may also include a broadcasting and recording apparatus 200 coupled to the editor 110. The editor 110 is configured to provide the synthetic image scenario 101 to the broadcasting and recording apparatus 200 in a form of streaming data. The broadcasting and recording apparatus 200 is configured to display the synthetic image scenario 101 on a display 210 of the broadcasting and recording apparatus 200. In an embodiment, the editor 110 may also include a transceiver (not shown in the figure) and an input device (not shown in the figure). The resource input module 111 may obtain input data through the input device or the transceiver. The broadcasting and recording apparatus 200 may also include a transceiver (not shown in the figure). The transceiver of the editor 110 and the transceiver of the broadcasting and recording apparatus 200 may perform wired or wireless communication, for example, and may also perform low noise amplification, impedance matching, frequency mixing, frequency up-conversion or downconversion, filtering, amplification, and similar operations. The transceiver is a user interface for receiving input data, for example.

In this embodiment, the multi-resource editing system 100 may be embodied as a processing host, for example, a desktop computer, a PC, a tablet PC, a cloud server, or the like, and may have functions such as image processing, image computing, and image synthesis, which is not limited by the invention. In an embodiment, the editor 110 and the broadcasting and recording apparatus 200 may respectively be two processing hosts disposed independently, while in another embodiment, the editor 110 and the broadcasting and recording apparatus 200 may each be disposed in one processing host, which may be adjusted depending on the actual requirements, and the invention is not limited thereto. The editor 110 may include relevant computing chips and/or computing circuits, for example, a central processing unit (CPU) with image data processing and computing functions, or any other programmable general-purpose or special-purpose microprocessor, digital signal processor (DSP), image processing unit (IPU), graphics processing unit (GPU), programmable controller, application specific integrated circuit (ASIC), programmable logic device (PLD), any other similar processing device, or a combination of the devices above. Moreover, the processing host may also include a storage medium. The storage medium is, for example, any form of fixed or removable non-volatile memory (NVM), such as random access memory (RAM), read-only memory (ROM), flash memory, hard disk drive (HDD), solid state drive (SSD), or similar elements or a combination of the elements above. The storage medium may store a plurality of modules (e.g., the resource input module 111 and the image editing module 112), a plurality of programs, and algorithms executable by the editor 110 to perform resource inputting, scene editing, and scenario production of the embodiments of the invention. The programs may include, but are not limited to, a presentation program, an augmented reality (AR) program, a virtual reality (VR) program, a system setting program, a background execution program, a video player program, a video conference program, and relevant image data, a plurality of modules, and file data of the embodiments of the invention.

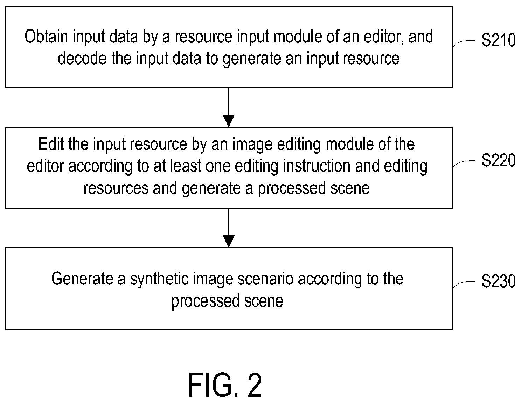

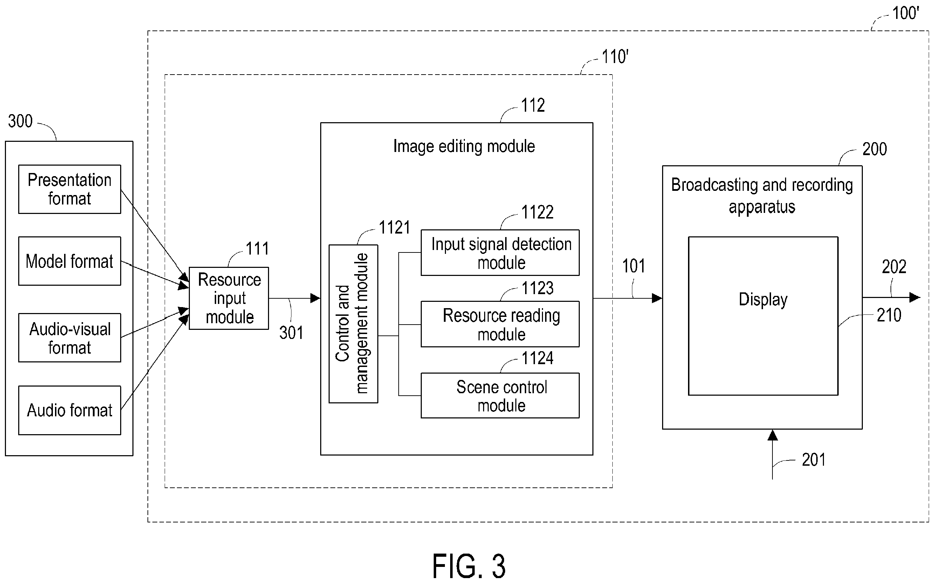

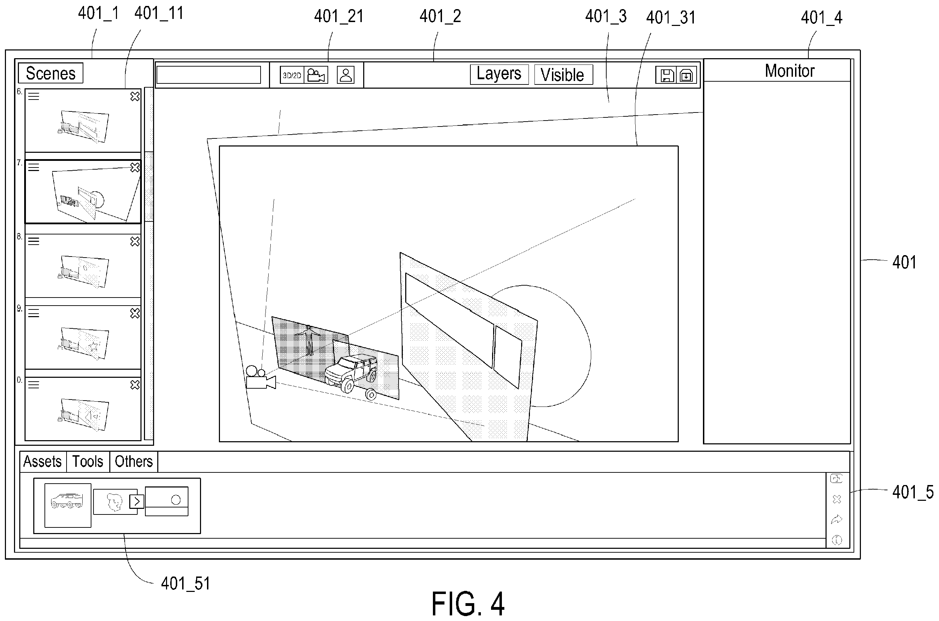

FIG. 2 is a flowchart of a multi-resource editing method of an embodiment of the invention. FIG. 3 is a schematic diagram of a multi-resource editing system of another embodiment of the invention. FIG. 4 is a schematic diagram of a user interface of an embodiment of the invention. A multi-resource editing system 100' of FIG. 3 is similar to the multi-resource editing system 100 of FIG. 1 with the following differences. In this embodiment, the image editing module 112 is coupled to the resource input module 111. The image editing module 112 includes a control and management module 1121, an input signal detection module 1122, a resource reading module 1123, and a scene control module 1124. The control and management module 1121 is coupled to the input signal detection module 1122, the resource reading module 1123, and the scene control module 1124.

With reference to FIG. 2 to FIG. 4, the multi-resource editing system 100' may perform steps S210 to S230 below, for example, for multi-resource inputting and multi-scene independent editing. In step S210, an editor 110' receives input data 300 provided by an external multimedia collection system (not shown in the figure) by the resource input module 111. The resource input module 111 extracts/decodes the input data 300 to generate an input resource 301. The input data 300 has at least one file format. The file format of the input data 300 may, for example, include at least one of a text format, an image format, an audio-visual format, an audio format, a scenario format, a model format (e.g., stereoscopic model format), a presentation format, a VR background format, an AR object format, and a scene template format. Therefore, the input resource 301 generated by the editor 110' through the decoding of the resource input module 111 may, for example, include at least one of a text resource, an image resource, an audio-visual resource, an audio resource, a scenario resource, a model resource (e.g., stereoscopic model resource), a presentation resource, a VR background resource, an AR object resource, and a scene template resource. In this embodiment, when the input data 300 includes a plurality of input data 300, the resource input module 111 can process the input data 300 in different file formats at the same time, and generate a different input resource 301 for each of the input data 300.

In step S220, the editor 110' may edit the input resource 301 by the image editing module 112 according to at least one editing instruction and a plurality of editing resources. The editing resources may include an asset resource, an editing tool, a model resource, a scene template resource, and the like. The editing tool may include tools for dragging, rotating, scaling, and changing colors for pictures and text. For example, the user inputs an editing signal to the image editing module 112 through an input device (not shown in the figure) or a transceiver (not shown in the figure), and the image editing module 112 generates corresponding the at least one editing instruction according to the at least one editing signal input by the user. The at least one editing signal corresponds to, for example, recording, clicking, dragging, rotating, scaling operation, and other editing instruction. The image editing module 112 edits the corresponding input resource 301 according to the at least one editing instruction and the editing resources during multi-scene independent processing to combine at least one layer, the input resource 301, and the editing resources in each scene before being processed to form a processed scene. Specifically, during the multi-scene independent processing, each scene is independent of each other, and the at least one editing signal input by the user only acts on the corresponding scene and does not affect other scenes. In addition, each scene includes at least one layer.

In an embodiment, if the scene template is a scene template resource preset in the editing resources, the plurality of layers in the scene template corresponds to the plurality of input resources 301. For example, different input resources 301 may be respectively configured in different layers, or the same input resources 301 may be configured in different layers. Moreover, the plurality of layers are edited according to at least one editing signal to achieve independent editing on settings and information of each input resource 301 in each scene. In another embodiment, if the scene template is a scene template resource of the input resource 301, the image editing module 112 may generate the corresponding layer in each scene before being processed according to the scene template of the input resource 301 to edit the corresponding layer according to the at least one editing instruction. In this embodiment, the multi-resource editing system 100' can edit a plurality of input resources 301 at the same time, and place the input resources 301 in different forms in different layers to achieve multi-layer independent editing. In an embodiment, since each scene may include at least two of layers corresponding to virtual stereoscopy (3D), planar pictures, text, and images, the synthetic image scenario 101 may include virtual stereoscopic (3D) animations, plane pictures, text, and images at the same time.

In step S230, the editor 110' may generate the synthetic image scenario 101 by the image editing module 112 according to the processed scene. The synthetic image scenario 101 includes, for example, edited scenes, the sequence of scenes, and audio-visual information. Accordingly, the multi-resource editing system 100' can process a plurality of input resources 301 and independently edit each scene.

In this embodiment, the multi-resource editing system 100' also includes the broadcasting and recording apparatus 200. The editor 110' outputs the synthetic image scenario 101 through the transceiver to the broadcasting and recording apparatus 200, so that the broadcasting and recording apparatus 200 generates a broadcast synthetic image 202 according to a recorded image 201 and the synthetic image scenario 101. The recorded image 201 is, for example, captured by a camera (not shown in the figure) of the broadcasting and recording apparatus 200. Accordingly, the user may edit the sequence of scenes and the settings of audio-visual playback in advance.

With reference to FIG. 2 to FIG. 4, in this embodiment, the multi-resource editing system 100' also includes a user interface. The user interface electrically connects the editor 110'. The user interface is associated with the editor 110', the input device, or the transceiver, for example. In an embodiment, the user interface electrically connects the image editing module 112. The user interface has a plurality of windows. The user interface is configured to generate at least one editing signal. The at least one editing signal is generated according to an operation result of the user interface. The image editing module 112 is configured to generate at least one editing instruction according to the at least one editing signal. The image editing module 112 is configured to generate a synthetic image scenario 101. The image editing module 112 is configured to output the synthetic image scenario 101 to the broadcasting and recording apparatus 200 such that the broadcasting and recording apparatus 200 is configured to generate a broadcast synthetic image 202 according to a recorded image 201 and the synthetic image scenario 101.

In an embodiment, the user interface is, for example, configured in the image editing module 112 of the editor 110'. The user interface is configured to generate at least one editing signal. In the other embodiment, the user interface is configured to generate at least one editing signal. A user interface 401 includes a scene and resource display window 401_1, a control window 401_2, a display window 401_3, a monitoring window 401_4, and an asset library window 401_5. The at least one editing signal is generated according to an operation result of at least part of the scene and resource display window 401_1, the control window 401_2, the display window 401_3, the monitoring window 401_4, and the asset library window 401_5. For example, the input signal detection module 1122 is configured to receive the at least one editing signal input by the user, and transmit the at least one editing signal to the control and management module 1121. The control and management module 1121 generates corresponding the at least one editing instruction according to the at least one editing signal, and transmits corresponding the at least one editing instruction to the resource reading module 1123 or the scene control module 1124 corresponding to the at least one editing instruction for processing of resource reading, resource adjustment, and scene control.

In this embodiment, the scene and resource display window 401_1 includes a multi-scene selection page 401_11 and a multi-resource display page (not shown in the figure). The multi-scene selection page 401_11 is configured to display each scene. For example, the multi-scene selection page 401_11 in FIG. 4 shows five scenes, but the invention does not specifically limit the quantity of scenes. Moreover, the text in FIG. 4 is only exemplary, and the invention does not specifically limit the text in the user interface. The multi-resource display page is configured to display each input resource 301 in the currently edited scene and each layer corresponding to the input resource 301. The input signal detection module 1122 is configured to receive the at least one editing signal generated by the multi-scene selection page 401_11 and the multi-resource display page, and transmit the at least one editing signal to the control and management module 1121. The control and management module 1121 generates corresponding the at least one editing instruction according to the at least one editing signal, and performs the multi-scene independent processing on the corresponding scene according to the at least one editing instruction. For example, as shown in FIG. 4, when the user edits a second scene in the multi-scene selection page 401_11, the input at least one editing signal only act on the second scene and does not affect other scenes.

In this embodiment, the asset library window 401_5 includes an asset selection page 401_51, an editing tool selection page (not shown in the figure), and an asset and tool switching page (not shown in the figure). The editing resources include, for example, assets and editing tools. The asset selection page 401_51 is configured to display each asset. The editing tool selection page is configured to display the editing tools. The asset and tool switching page is configured to switch between the asset selection page and the editing tool selection page. The editing resources may be pre-stored in the storage medium (not shown in the figure), the resource input module 111, or the image editing module 112 of the multi-resource editing system 100', and may also be imported or loaded from a cloud server (not shown) through the transceiver into the multi-resource editing system 100'.

In this embodiment, the resource reading module 1123 is configured to identify and obtain specific functions of the plurality of input resources, and transmit the specific functions to the control and management module 1121. The monitoring window 401_4 includes a specific function selection page (not shown in the figure) and is configured to display the specific functions corresponding to the input resource 301. For example, the input signal detection module 1122 detects the operation result on the user interface, and the operation result is inspecting the specific functions of the input resource 301. The specific functions are, for example, an explosion operation and a cross-section operation of a stereoscopic model. Next, the input signal detection module 1122 transmits corresponding the at least one editing signal to the control and management module 1121. The control and management module 1121 generates the at least one editing instruction according to the at least one editing signal, and transmits the at least one editing instruction to the resource reading module 1123. Accordingly, the control and management module 1121 receives the specific functions corresponding to the input resource 301 from the resource reading module 1123, and displays the specific functions in the monitoring window 401_4 for clicking and viewing by the user. For example, when the user clicks on a model resource (the input resource 301), the monitoring window 401_4 displays the explosion operation and the cross-section operation (the specific functions) of the corresponding model.

In this embodiment, the display window 401_3 includes a real-time editing screen 401_31 and is configured to display one of the scenes under process. More specifically, the real-time editing screen 401_31 is configured to display the currently edited scene. The scene control module 1124 is configured to perform the multi-scene independent processing, such as adjustment of the quantity or the sequence of scenes, scene duplication, and scene deletion, according to the at least one editing instruction. For example, the input signal detection module 1122 transmits the at least one editing signal corresponding to the operations of the user to the control and management module 1121. Next, the control and management module 1121 edits the corresponding scene according to the at least one editing signal, and transmits the corresponding editing result signal to the scene control module 1124. Accordingly, the scene control module 1124 displays the content corresponding to the editing result signal in the real-time editing screen 401_31, so that the multi-resource editing system 100' visualizes the operation of the user and displays the operation of the user in the display window 401_3 in real time, improving efficiency in editing by the user and improving user satisfaction for the user interface.

In this embodiment, the control window 401_2 includes a function selection page 401_21 and an output page (not shown in the figure). The control and management module 1121 transmits a reminding signal to the control window 401_2 according to a received successful archival signal. The output page is configured to display a reminding screen corresponding to the reminding signal. For example, the user clicks on the archive icon in the function selection page 401_21, and the input signal detection module 1122 transmits corresponding the at least one editing signal to the control and management module 1121. Next, the control and management module 1121 generates corresponding the at least one editing instruction to the storage medium according to the at least one editing signal. Moreover, the control and management module 1121 transmits the reminding signal to the control window 401_2 according to the successful archival signal received from the storage medium, so that the output page displays the reminding screen corresponding to the successful archival signal.

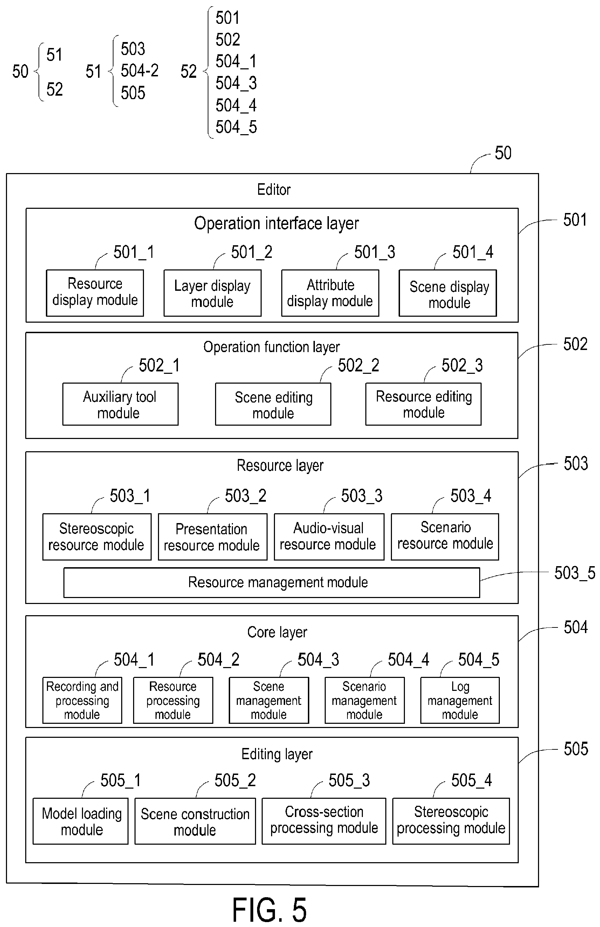

FIG. 5 is an architectural diagram of an editor of another embodiment of the invention. With reference to FIG. 5, the editors 110, 110' in the multi-resource editing systems of FIG. 1 and FIG. 3 may be replaced with an editor 50 of this embodiment. In this embodiment, the editor 50 includes a resource input module 51 and an audio-visual editing module 52. The resource input module 51 and the audio-visual editing module 52 each include a plurality of submodules. The editor 50 may be divided into an operation interface layer 501, an operation function layer 502, a resource layer 503, a core layer 504, and an editing layer 505. The operation interface layer 501 includes a resource display module 501_1, a layer display module 501_2, an attribute display module 501_3, and a scene display module 501_4. The operation function layer 502 includes an auxiliary tool module 502_1, a scene editing module 502_2, and a resource editing module 502_3. The resource layer 503 includes a stereoscopic resource module 503_1, a presentation resource module 503_2, an audio-visual resource module 503_3, a scenario resource module 503_4, and a resource management module 503_5. The core layer 504 includes a recording and processing module 504_1, a resource processing module 504_2, a scene management module 504_3, a scenario management module 504_4, and a log management module 504_5. The editing layer 505 includes a model loading module 505_1, a scene construction module 505_2, a cross-section processing module 505_3, and a stereoscopic processing module 505_4.

As mentioned above, the resource display module 501_1 is configured to display a resource that is input (e.g., an input resource or an editing resource). The layer display module 501_2 is configured to display the layers corresponding to each scene and the corresponding resources. The attribute display module 501_3 is configured to display attributes of the current operation resource and the editing tools corresponding to the attributes. For example, when the user operates a stereoscopic model, the attribute display module 501_3 displays the corresponding data (i.e., attributes) of the explosion operation, cross-section operation, scaling operation, and the like of the stereoscopic model. The scene display module 501_4 is configured to display the sequence, the thumbnail images, and the quantity of the scenes.

In this embodiment, the auxiliary tool module 502_1 is configured to manage the editing tools. The scene editing module 502_2 is configured to preview a scene, record an animation for a single scene, or play audio and video for a scene. The resource editing module 502_3 is configured to edit the input resource 301 (shown in FIG. 3) of the at least one editing instruction. The resource management module 503-5 is configured to manage and store the plurality of input resources 301 and the editing resources, for example, to respectively store the input resources 301 in the stereoscopic resource module 503_1, the presentation resource module 503_2, the audio-visual resource module 503_3, and the scenario resource module 503_4 according to different file formats.

In this embodiment, the recording and processing module 504_1 is configured to process and record animations of a plurality of scenes to form the synthetic image scenario 101. The scenes includes information about the positional status of the layer at different timings or the action to be performed. More specifically, the scenes include movement information and positional information of an object or a model in a certain layer. The movement information is, for example, the moving speed and the curve change of the object or the model. For example, the movement information is about how the object or the model moves from point A to point B in the currently edited scene. The positional information includes, for example, the specific positional information of point A and point B of the object or the model in the currently edited scene. The resource processing module 504_2 is configured to generate the corresponding input resource 301 according to the input data 300. The scene management module 504_3 is configured to manage the scenes and perform operations such as scene sorting, scene duplication, and scene deletion. The scenario management module 504_4 is configured for management of the generated synthetic image scenario 101, serialization of scenarios, and deserialization of scenarios. The log management module 504_5 is configured for developers to inspect positioning errors and to store system logs. The model loading module 505_1 is configured to load the stereoscopic model. The scene construction module 505_2 is configured to establish a basic scene. For example, the scene construction module 505_2 establishes the basic scene according to the scene template stored in the resource management module 503_5. The cross-section processing module 505_3 is configured to generate a crosssectional view of the model. The stereoscopic processing module 505_4 is configured to generate stroked curves of the stereoscopic model. The editing layer 505 may adopt third party plug-ins to perform loading and processing of the stereoscopic model. The third-party plug-ins are, for example, plug-in software such as Trilib, Giles, Cross Section Shader, and Quick Outline.

In this embodiment, the resource input module 51 includes the resource layer 503, the resource processing module 504_2, and the editing layer 505. The audio-visual editing module 52 includes the operation interface layer 501, the operation function layer 502, the recording and processing module 504_1, the scene management module 504_3, the scenario management module 504_4, and the log management module 504_5. More specifically, the resource display module 501_1, the layer display module 501_2, and the scene display module 501_4 may correspond to the user interface shown in FIG. 4 and the input signal detection module 1122 of FIG. 3. The attribute display module 501_3 may correspond to the resource reading module 1123 of FIG. 3. The auxiliary tool module 502_1, the resource editing module 502_3, the recording and processing module 504_1, the scenario management module 504_4, and the log management module 504_5 may correspond to the control and management module 1121 of FIG. 3. The scene editing module 502_2 may correspond to the control and management module 1121 and the scene control module 1124 of FIG. 3. The scene management module 504_3 may correspond to the scene control module 1124 of FIG. 3.

In summary of the foregoing, in the multi-resource editing system and the multi-resource editing method of the embodiments of the invention, the input data in different formats may be converted into the corresponding input resources by the resource input module to process multiple input resources at the same time. In addition, in the multi-resource editing system and the multi-resource editing method of the embodiments of the invention, each layer and each scene are independently edited by the image editing module to generate a plurality of processed planar or stereoscopic scenes and combine the scenes into the synthetic image scenario to be provided to the broadcasting and recording apparatus for subsequent use. Accordingly, the user can edit and produce audio-visual scenarios for broadcasting or remote teaching in advance. Moreover, the image editing module of the embodiments of the invention independently processes different input resources in different layers to perform operations of inputting and editing multiple resources at the same time. The image editing module of the embodiments of the invention can independently edit each scene to provide the multi-resource editing system and the multi-resource editing method of good convenience.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A multi-resource editing system comprising:
an editor (110), a user interface (401) and a broadcasting and recording apparatus (200), wherein the editor (110) comprises an image editing module (112);
the user interface (401) is electrically connected to the image editing module (112),
wherein the user interface (401) comprises a plurality of windows, and the user interface (401) is configured to generate at least one editing signal, the at least one editing signal is configured to be generated according to an operation result of the user interface (401), and
the image editing module (112) is configured to generate at least one editing instruction according to the at least one editing signal, and is configured to generate a synthetic image scenario (101) according to the at least one editing signal, the image editing module (112) is configured to output the synthetic image scenario (101) to the broadcasting and recording apparatus (200) such that the broadcasting and recording apparatus (200) is configured to generate a broadcast synthetic image (202) according to a recorded image and the synthetic image scenario (101).

2. The multi-resource editing system according to claim 1, wherein the image editing module (112) further comprises an input signal detection module (1122) and a control and management module (1121), the input signal detection module (1122) is configured to receive the at least one editing signal, and the control and management module (1121) is configured to generate the at least one editing instruction according to the at least one editing signal, and the editor (110) further comprises a resource input module (111) and a control and management module (1121), the resource input module (111) is configured to obtain input data (300) and decode the input data (300) to generate a plurality of input resources (301), wherein the input data (300) has at least one file format, and the image editing module (112) is coupled to the resource input module (111), the image editing module (112) is configured to edit the input resources (301) according to the at least one editing instruction and the plurality of editing resources and generate a plurality of processed scenes, each of the scenes comprising at least one layer, wherein the image editing module (112) is configured to perform multi-scene independent processing to combine the at least one layer, the input resources (301), and the editing resources in each of the scenes before being processed to form the processed scenes, and generate the synthetic image scenario (101) according to the processed scenes.

3. The multi-resource editing system according to claim 1 or 2, the user interface (401) comprises a scene and resource display window (401_1), an asset library window (401_5), a monitoring window (401_4), a control window (401_2) and a display window (401_3), wherein the at least one editing signal is configured to be generated according to at least one operation result of the scene and resource display window (401_1), the asset library window (401_5), the monitoring window (401_4), the control window (401_2) and the display window (401_3).

4. The multi-resource editing system according to claim 3, wherein the scene and resource display window (401_1) comprises a multi-scene selection page (401_11) and a multi-resource display page, the multi-scene selection page (401_11) is configured to display the scenes, the multi-resource display page is configured to display the input resources (301), the input signal detection module (1122) is configured to receive the at least one editing signal generated by the multi-scene selection page (401_11) and the multi-resource display page, the control and management module (1121) is configured to generate the corresponding the at least one editing instruction, and perform the multi-scene independent processing on the corresponding scene among the scenes according to the at least one editing instruction.

5. The multi-resource editing system according to claim 3 or 4, wherein the asset library window (401_5) comprises an asset selection page, an editing tool selection page, and an asset and tool switching page, the editing resources comprise a plurality of assets and a plurality of editing tools, the asset selection page is configured to display the assets, the editing tool selection page is configured to display the editing tools, and the asset and tool switching page is configured to switch between the asset selection page and the editing tool selection page.

6. The multi-resource editing system according to claim 3, 4 or 5, wherein the image editing module (112) further comprises a resource reading module (1123), the resource reading module (1123) is configured to identify and obtain at least one specific function of the input resources (301), and transmit the at least one specific function to the control and management module (1121), and the monitoring window (401_4) comprises a specific function selection page and is configured to display the at least one specific function of the input resources (301).

7. The multi-resource editing system according to any one of the claims 3-6, wherein the display window (401_3) comprises a real-time editing screen and is configured to display one of the scenes under process, the image editing module (112) further comprises a scene control module (1124), and the scene control module (1124) is configured to adjust a quantity and a sequence of the scenes according to the at least one editing instruction.

8. The multi-resource editing system according to any one of the claims 3-7, wherein the control window (401_2) comprises an output page, the control and management module (1121) transmits a reminding signal to the control window (401_2) according to a successful archival signal being received, and the output page is configured to display a reminding screen corresponding to the reminding signal.

9. The multi-resource editing system according to any one of the claims 2-8, wherein the input resources (301) comprise at least one of an image resource, a model resource, a virtual reality background resource, an augmented reality object resource, an audio-visual resource, an audio resource, and a presentation resource.

10. The multi-resource editing system according to any one of the claims 2-9, wherein the image editing module (112) is configured to generate the corresponding at least one layer according to the input resources (301), such that the image editing module (112) is configured to edit the corresponding at least one layer according to the at least one editing instruction.

11. The multi-resource editing system according to any one of the preceding claims, wherein the broadcasting and recording apparatus (220) is electrically connected to a camera, wherein the recorded image is captured by the camera.

12. A multi-resource editing method comprising:
obtaining and decoding a plurality of input data (300) by a resource input module (111) of an editor (110) to generate a plurality of input resources (301), wherein the input data (300) has at least one file format;
editing the input resources (301) according to at least one editing instruction and a plurality of editing resources and generating a plurality of processed scenes by an image editing module (112) of the editor (110), each of the scenes comprising at least one layer, wherein the image editing module (112) performs multi-scene independent processing to combine the at least one layer, the input resources (301), and the editing resources in each of the scenes before being processed to form the processed scenes; and
generating a synthetic image scenario (101) according to the processed scenes.

13. The multi-resource editing method according to claim 12, further comprising:
outputting the synthetic image scenario (101) to a broadcasting and recording apparatus (200) by the editor (110); and
generating a broadcast synthetic image (202) by the broadcasting and recording apparatus (200) according to a recorded image and the synthetic image scenario (101).

14. The multi-resource editing method according to claim 12 or 13, further comprising:
receiving at least one editing signal by an input signal detection module (1122) from an input device, wherein the at least one editing signal are generated according to at least one operation result of at least part of a scene and resource display window (401_1), an asset library window (401_5), a monitoring window (401_4), a control window (401_2), and a display window (401_1) of a user interface (401); and
generating the at least one editing instruction by a control and management module (1121) according to the at least one editing signal to perform the multi-scene independent processing.

15. The multi-resource editing method according to any one of the claims 12-14, wherein the multi-scene independent processing comprises:
displaying a multi-scene selection page (401_11) and a multi-resource display page by the user interface (401), and receiving the at least one editing signal generated by the multi-scene selection page and the multi-resource display page and transmitting the at least one editing signal to the control and management module by the input signal detection module of the image editing module when the scene and resource display window of the user interface is executed, such that the control and management module generates corresponding the at least one editing instruction according to the at least one editing signal being received, and performs the multi-scene independent processing on the corresponding scene among the scenes according to the at least one editing instruction.
